# EUROPEAN PATENT SPECIFICATION

(11) **EP 1 705 869 B1**
(45) Date of publication and mention of the grant of the patent: **27.10.2010**
(21) Application number: 05253558.0
(22) Date of filing: 09.06.2005
(51) Int. Cl.: H04L 29/08

(54) **Method and apparatus for locating mobile device users within a wireless computer network**
Verfahren und Vorrichtung zur Lokalisierung von Benutzern mobiler Endgeräte in einem drahtlosen Computer-Netzwerk
Procédé et dispositif de localisation des utilisateurs des terminaux mobiles dans un réseaux sans fil.

(30) Priority: 22.03.2005 MY 0501244
(43) Date of publication of application: 27.09.2006
(73) Proprietor: BRITISH TELECOMMUNICATIONS public limited company, London EC1A 7AJ (GB)
(72) Inventor: Tan, Vern Tact, 13700 Prai (MY); Roxburgh, David, Suffolk, IP12 4JP (GB); Capp, Matthew William, Ipswich, Suffolk, IP4 5LQ (GB); Farley, Patrick Brian, Ipswich, Suffolk, IP4 4NT (GB)
(74) Representative: Williamson, Simeon Paul

(56) References cited:
- WO-A-01/31843
- WO-A-2004/049628
- US-A1- 2004 166 874
- KARCHER H: "Mobile Business: High-Speed Convenience for Business Travelers at Hotels and Airports" SIEMENS PUBLICATION, 24 April 2001 (2001-04-24), XP002200065

## Description

### Technical Field

The present invention relates to a method and apparatus for locating mobile device users within a wireless computer network, and in particular to such a method and apparatus for operating within a computer network including one or more wireless access devices. In particular, the present invention is applicable to such a method and apparatus in which the network includes wireless access points and co-operating mobile devices operating in accordance with the IEEE 802.1x wireless network standard.

### Background to the Invention

The IEEE 802.1x wireless network standard permits mobile devices with a suitable Network interface Card (or an equivalent functionality built into the mobile device in a more integrated manner), hereinafter referred to as an 802.1x NIC, to wirelessly access a wired network. Typically the wired network is connected to the Internet and also provides facilities for connecting in a secure manner to a company's intranet using a Virtual Private Network (VPN) through the Internet, or some similar such technology.

Currently in Britain and other advanced countries, a large number of so called "Public Wi-Fi Hotspots" are being set up which enable devices with an 802.1x NIC to connect wirelessly to the Internet or their corporate network when at one of these Hotspots. For example, in the UK, British Telecommunications plc (BT) is responsible for the set-up and operation of some of these public Hotspots. Individual consumers may connect through to the Internet at one of these BT Hotspots by paying BT a service charge for such usage. Corporate customers may pay BT to enable their employees to access their corporate intranet from one of these hotspots via a VPN.

In order to ensure that only duly authorised users can take advantage of the hotspots to access the Internet or a corporate intranet, an authentication and authorisation process is employed which is discussed in greater detail below.

Each hotspot typically has a fairly small area of operation, determined by the transmission power of the wireless access device (which is the main piece of kit required to form a Hotspot) and the geography of the area surrounding the wireless access device, typically of the order of a few tens of metres distant from the wireless access device at most. It has thus been noted on several occasions in the past that the information about the wireless access device to which a mobile device is connected could be used to obtain location information as to the whereabouts of the mobile device in question.

For example, US published patent application No. US 2002/0095486 describes a method of locating mobile computer users in a wireless network in which each mobile device includes some software which identifies which network access point it is talking to (or, in a preferred embodiment, it attempts to receive signals from all access points in range and tries to estimate its location, relative to all access points from which it can receive a signal, based on a pre-stored map of expected signal strengths from access points) and then either sends its own estimated location to a location server (located somewhere within the wired network) or it simply sends the ID of the access point to the location server (which then looks up the location of the access point itself and infers the location of the device on this basis).

The application does discuss in general terms the issue that there is not necessarily always a one to one correspondence between user and device, but it does not explain fully how it overcomes this hurdle when looking for a particular user. It seems to assume that there is a one to many correspondence between users and devices such that a single user may use more than one device, but a given device will only ever have one user. In such a case, finding out where a user is simply requires establishing which of a user's set of devices has been active most recently (assuming this is an indication of the user having done something locally at the device to make it active) and this is what the application describes the system (in particular the location server) as doing.

WO 2004/049628 A describes a user positioning system for a Wireless Local Area Network in which an Authentication, Authorisation and Accounting server is modified to transmit user information and access point identity information to a positioning management subsystem.

Karcher H.: "Mobile Business: High-Speed Convenience for Business travellers at Hotels and Airports" SIEMENS PUBLICATION, 24 April 2001, XP002200065 describes the use of a captive portal server to control user access to the internet or a corporate network by forcing the user to view a log-in page requesting user credentials, prior to allowing the user access to the Internet.

### Summary of the Invention

According to a first aspect of the present invention, there is provided a computer network as set out in claim 1 and a method as set out in claim 6.

Preferably the access point is a wireless access point (also referred to as a wireless router) able to communicate with a mobile device using a standard protocol such as any of the IEEE 802.11 standards (e.g. 802.11b, 802.11a, 802.11g, etc, which standards are conveniently referred to generically as being an 802.11x standard) or any of the Bluetooth specifications (see the Bluetooth organisation's web-site for details at http://www.bluetooth.org). Most preferably the wireless access point uses one of the IEEE 802.11x standards.

The access point and the captive portal server may all be owned and operated by the user's service provider, or alternatively, they could be owned and operated by a network operator who simply has a commercial agreement with the user's service provider to enable the subscribers of the service provider to access the Internet or other commercial services via the wireless network.

The use of a captive portal server for automatically supplying the user with the opportunity to authenticate him or herself onto the system, whilst preventing him or her from accessing the network until such authentication has been completed, is particularly advantageous in the above claimed system as it enables the entire system to work with mobile devices requiring no special software (other than standard drivers for controlling the wireless interface and a standard web browser). Furthermore, the use of the captive portal server as the device which submits the user location message to the location server (and thus needs some additional functionary - i.e. over and above that of a standard captive portal server) is particularly advantageous because this device requires tailoring to the particular circumstances of the network in any event so it is no great extra work to modify this device to perform the notification of the location server and furthermore, this device will also always have easy firsthand access to the information both as to whether or not the user has been successfully logged on to the network and from which access point the user is connected to the network.

Preferably, the captive portal server transmits by Hyper Text Transfer Protocol (HTTP) over Secure Sockets Layer (SSL) (together known by the acronym HTTPS) an authentication or log-in web page, in response to an HTTP request for any web page from a standard browser application running on the user's device, which asks the user to supply some user credentials (for example a user ID and a password and possibly an identification of the service provider to which the user subscribes). When the captive portal server receives the user credentials, it preferably constructs an authentication and authorisation request (in, for example, the RADIUS protocol) and transmits this to an authentication and authorisation server such as an Authentication, Authorization and Accounting (AAA) Server which performs authentication and authorisation using the RADIUS protocol. When the AAA server has checked the user supplied credentials against its stored records, it will issue a response which may be an acceptance, a refusal or a request for the user to supply further credentials.

When the response is a request for the user to supply further credentials, this is appropriately processed by the portal and then relayed back to the user, whose response is then forwarded on by the portal back to the AAA server. When the response is a refusal, the portal will process this and forward on an explanatory message to the device for display to the user, but no further action is taken by way of allowing access to the network for the user. Furthermore, in one embodiment no message is sent by the portal server to the location server informing the location server of the location of the user, since the user will not typically be able to receive data over the network and so there is little point in advertising his location to third parties (however, in alternative embodiments, the location information may be sent nonetheless if the access point is configured to allow certain data through to the mobile even without the device being authenticated, for example in order to allow a service to provide the user of the mobile device with details about where the user can purchase credits for accessing the network from a local retailer, etc.). When the response is an acceptance, the portal server instructs the wireless router or access point to allow the device to have access to the network (and any interconnected networks such as a company intranet or the Internet); additionally, the portal server sends a message to the location server to inform it of the user's ID and the ID of the wireless router or access point to which the user is connected, so that the location server can update its records about the whereabouts of that particular user.

According to a second aspect of the present invention, there is provided a method of obtaining location information about a user of a mobile device connected to a computer network via an access point, the method comprising the device connecting to the computer network via the access point and transmitting an HTTP (or HTTPS) request to the network, the network transmitting in response to the HTTP request a log on web page to the device requesting user credentials, the network generating an authentication request in dependence upon the requested user log on credentials, and transmitting this to an AAA server, receiving a response from the AAA server and, if the response indicates that the user is authenticated and authorised, the network storing details of the identification of the user and of the access point of the network to which the mobile device is connected to the network.

Preferably the access point is a wireless access point and the mobile device connects to the wireless access point over a wireless interface (e.g. an IEEE 802.11x type interface, or a Bluetooth interface).

Preferably the method includes the network requiring the mobile device to periodically require re-authentication to enable the device to continue to have access to the network and the network storing, in addition to the identifications of the user and of the access point, the approximate time at which the user last authenticated or re-authenticated together with an indication that the location information is valid for approximately only as long as the period within which the network requires the user to re-authenticate him or herself.

The first and second aspects of the present invention are advantageous compared with prior art solutions in that the authentication process which is used to obtain the user information depends upon the user authenticating him or herself rather than the mobile device which the user is using. Since no special software is required, the user may use any device (which includes a standard browser and standard drivers for controlling the wireless interface card/device) and he or she will still be locatable.

Preferably, the message sent from the portal server to the location server in the event of a successful log-on by the user includes the user ID successfully used by the user to logon to the network and the Internet Protocol (IP) address of the access point router (i.e. the part of the access point which deals with IP routing of IP packets). The message may alternatively include an ID for the router/access point used by the wireless network operator as a more intuitive manner of identifying its routers/access points. Alternatively, the Media Access Control (MAC) address of access point could be used instead` as this is "guaranteed" to be a unique number it should avoid any (remote) possibilities of confusion caused by two different access points having the same ID.

Preferably the access point is set up to require re-authentication and authorisation of the user on a frequent basis (e.g. at least as often as every five or ten minutes and preferably as often as every one or two minutes, possibly even as often as every few seconds), and the location server is set up to consider that a notification (about the user ID and the wireless router to which the user is connected) has a duration of validity approximately as long as the period after which re-authentication of the user is required by the access point.

Preferably, in addition to the authentication and authorisation of a user expiring by the passive action of a user failing to re-authenticate (or by the user going out of range of the access point's transceiver which, in the present embodiment, more or less amounts to the same thing), upon active initiation by a user (i.e. by the user explicitly requesting termination of the connection to the wireless router) the wireless router informs the portal server of the imminent disconnection; the portal server then informs the AAA server, which updates its records accordingly (primarily for billing purposes where the user is charged on a duration of connection basis), and at the same time it (the portal server) sends a notification to the location server informing it of the disconnection.

Preferably, the location server communicates with a service exposure engine, such as that described in co-pending UK patent application No. 0407388.8, which provides a common interface by which third party applications can access the information stored in the location server in a secure, safe and reliable manner. By secure, it is meant that only duly authorised and authenticated parties are able to access the location information, by safe it is meant that the location server will not be overwhelmed or cause problems to occur on the wireless network as a result of spurious or excessive requests from third parties and by reliable, it is meant that the correct information will be provided in response to a legitimate request from a third party.

Preferably, after the user has performed the initial authentication with the AAA server (via the portal server) for the first time at the start of setting up a connection via the wireless router, subsequent re-authentication of the user may be done automatically by the device on behalf of the user. Preferably this is done by including in the initially downloaded authentication web-page from the portal server a Javascript application or Java applet which stores the log-on credentials supplied by the user, for the duration of the connection, and uses these stored credentials to perform the re-authentication in a timely manner. Alternatively, a cookie could be used to prevent the user from having to continuously re-authenticate himself manually. The use of Javascript applications, Java applets and cookies for this sort of purpose is well understood in the art and will not be described further.

### Brief Description of the Drawings

In order that the present invention may be better understood, embodiments thereof will now be described, by way of example only, with reference to the accompanying drawings in which:
Figure 1 is a schematic illustration of the overall architecture of a system according to an embodiment of the present invention;
Figure 2 is a sequence diagram showing the sequence in which signals pass between the mobile device of a user to be located, the network system viewed as a whole, a location application which permits other users to find out the location of user to be located, and a user employing the services of the location application to establish the location of the user to be located;
Figure 3 is a sequence diagram similar to that of Figure 2 but showing the signals passing between the mobile device of the user to be located and various components of the network grouped together as the system in Figure 2, during the initial authentication of the user to be located by the network;
Figure 4 is a sequence diagram similar to that of Figure 3 but relating to the logging off of the user to be located from the network; and
Figure 5 is a sequence diagram showing the signals passing between the location application of Figure 2 and two components of the network, illustrated as a grouped single entity in Figure 2, during the processing of a location query by the location application.

### Detailed Description of a first Embodiment

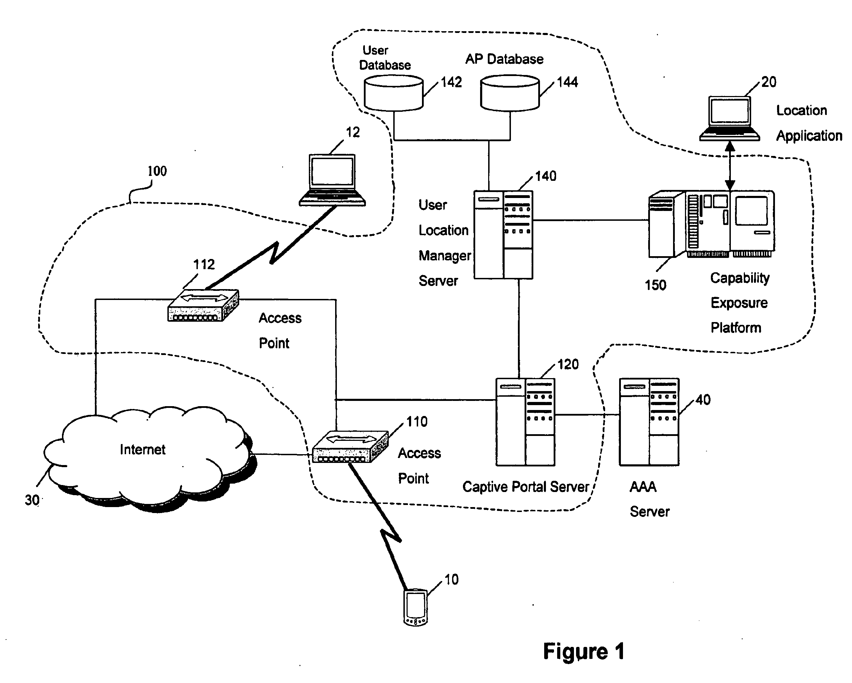

Referring now to Figure 1, the general architecture is seen to comprise a number of mobile devices 10, 12 which are wireless capable (e.g. via a IEEE 802.11x type protocol), a fixed device 20 running an application which assists users mobile users to locate one another, the Internet 30, an Authentication, Authorization and Accounting (AAA) server 40, which is operable to identify and authenticate a user, using a secure protocol such as RADIUS, on the basis of supplied user credentials (e.g. a user ID and (an encrypted) password), and the wireless network system 100 of the present embodiment.

The wireless network system 100 includes a plurality of wireless routers or Access Points 110, 112 (hereinafter simply AP's) with which the wireless capable mobile devices may establish a wireless connection; a captive portal server 120 which serves a mobile device with an initial logon web page as soon as it (the mobile device) connects to one of the AP's (as well as performing other functions described in more detail below); a user location manager server 140 which manages the databases of the system 100 which track user location information including a user database 142, which stores details of registered users and, if known, the AP to which they are currently connected, as well as an AP database 144, which stores details of the AP's 110, 112 including their MAC addresses, their geographical locations and, in the present embodiment, their unique ID's as provided by the wireless network operator; and finally, the system 100 also includes a capability exposure platform 150 which provides a safe, secure and reliable interface by which third parties may access the user location data managed by the user location manager server 140. In the present embodiment, the capability exposure platform 150 is that described in the present applicant's co-pending patent British patent application No. GB 0407388.8.

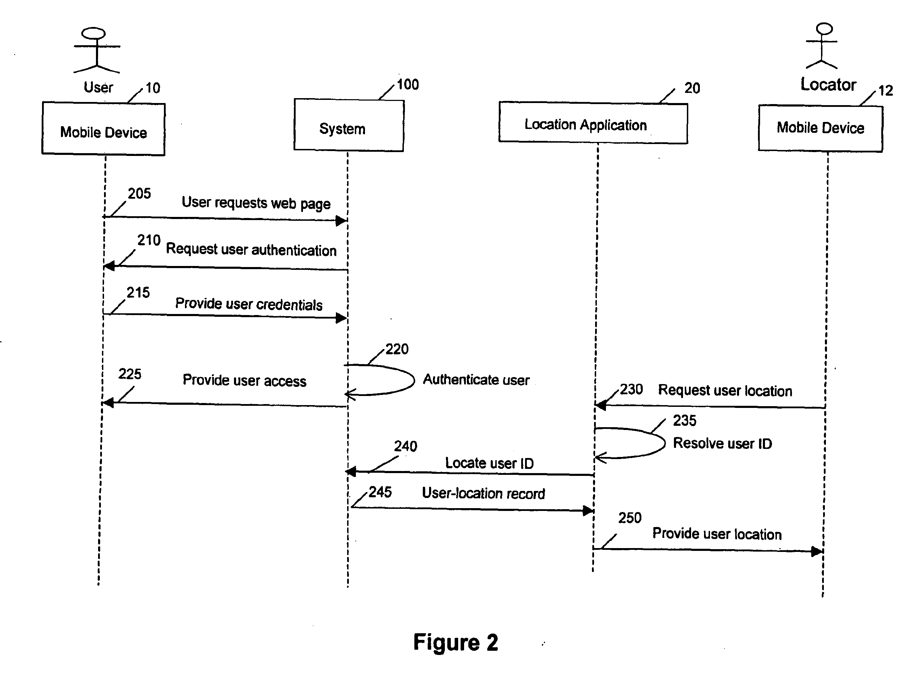

Note that in the discussion which follows with reference to Figures 2 to 5 the AAA server 40 will be considered to be part of the system 100 since in the present embodiment the system 100 is co-owned and controlled by the service provider which operates and controls the AAA server 40 so it is appropriate to consider it as part of the system 100; however, it should be noted that in the more general case the AAA server may well be owned and operated by a different party to that which owns and operates the system 100, and indeed the system 100 may be operable to contact a number of different AAA servers depending upon which service provider the user subscribes to, etc and for that reason it is shown in Figure 1 as being outside the system 100 of the present embodiment.

Furthermore, the user location manager server 140 (and associated databases 142, 144) and/or the capability exposure platform 150 could also be owned and operated by a different party to that owning and/or operating the access points 110, 112 and captive portal server 120. Certainly, these various elements need not be geographically proximate to one another, etc.

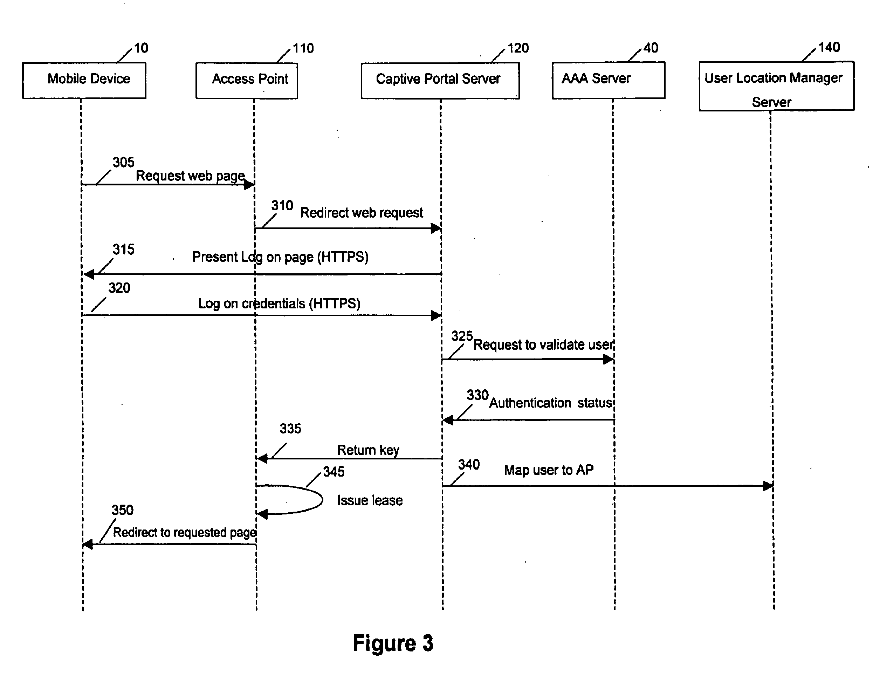

Referring now to Figure 2, an overview of the messages sent between the mobile device 10 of the user to be located, the system 100, the device 20 running a location application, and the mobile device 12 of a locator user (i.e. a user who wishes to establish the location of the user of mobile device 10, who will hereinafter be referred to as the locatee user) when using the system of the present invention to enable the locator user to establish the location of the locatee user. The process commences when the locatee user decides to try to connect to the system 100 using a wireless interface between her mobile device 10 and one of the AP's of the system 100. Once a wireless connection has been established, the AP issues the mobile device 10 with a temporary IP address to be used for the duration of the session using the Dynamic Host Configuration Protocol (DHCP). As part of this process, the AP acquires the MAC address of the mobile device 10; this is then used as the basis of the firewall restrictions in the AP (discussed further below). Having completed this, the locatee user then requests a web page via a standard browser operating on mobile device 10 (illustrated in Figure 2 by the "user requests web page" arrow 205). Whatever web page the user requests, the system 100 returns (as indicated by the "request user authentication" arrow 210) an authentication web page requesting the user to log on to the system by providing her user credentials. The user fills in the requested credentials within the appropriate text fields provided within the authentication web page and these details are transmitted back from the mobile device 10 to the system 100 (as indicated by the "provide user credentials" arrow 215), for example by way of a new HTTP request. Having received the user credentials, the system 100 performs some internal processing (as indicated by the "authenticate user" arrow 220) the details of which will be described below with reference to Figure 3, to authenticate the user based on the received credentials. Having authenticated the user based on the received user credentials, the system 100 updates various records and gives the mobile device 10 full access to the Internet 30 (in alternative embodiments, restricted access could be given to only certain designated Internet sites, or to a company intranet, etc.); additionally it may send a confirmation web page initially confirming that the user has now been authorised to access the internet. In the present embodiment, the system provides the mobile device 10 with the originally requested web page (as illustrated by the "provide user access" arrow 225 in Figure 2).

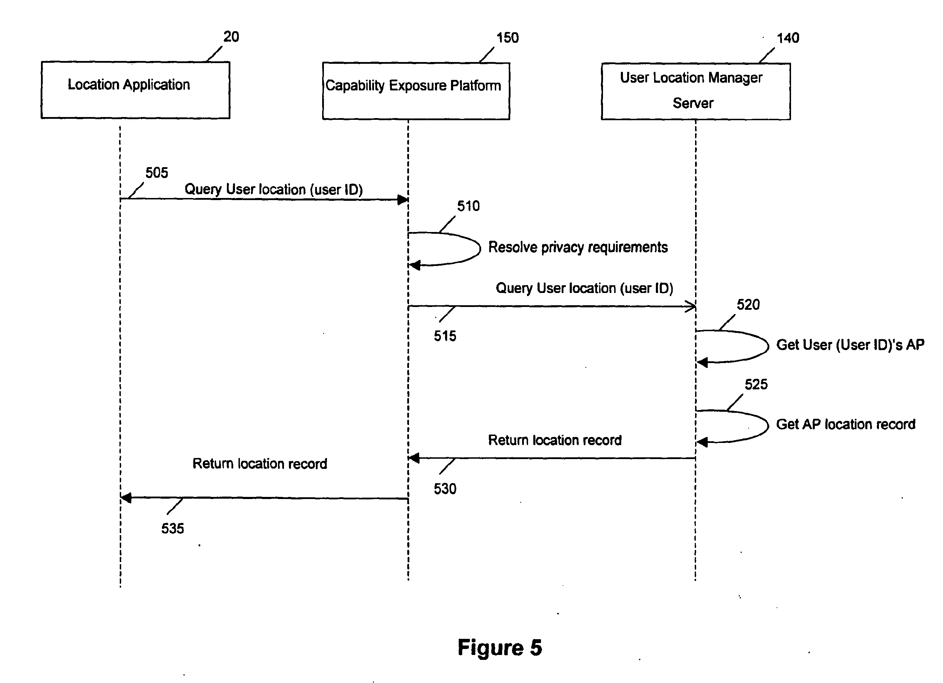

At some time later, the locator user, who is using mobile device 12, decides that he wishes to locate his friend, the locatee user using mobile device 10. (Note that although the locator is shown as using mobile device 12 in Figure 1, there is no requirement for the locator's device to be mobile. Any computing device with an Internet connection could be used for this purpose.) He therefore sends a request location message (indicated by the "request user location" arrow 230 in Figure 2) to the device 20 running a buddy locating application. In the present embodiment, as illustrated in Figures 1 and 2, device 20 is a desktop personal computer configured to operate as a server computer in respect of users such as the locator user and configured to operate as a client in respect of the system 100 (and in particular the capability exposure platform 150 thereof, as will be described in greater detail below with reference to Figure 5). When the device 20 receives the "request user location" message 230 from mobile device 12, it performs some internal processing to check that the requester is authorised by the locatee user to receive the locatee user's location, and additionally it converts, if necessary, the user ID for the locatee user given by the locator user (which might be specific only to the location application running on device 20) into the user ID which will be recognised by the system 100. The internal processing within device 20 is indicated in Figure 2 by the "resolve user ID" arrow 235.

Having established that the locator is suitably authorised and having resolved the user ID (to find the user ID known by the system 100), the device 20 sends a message (indicated by the "locate user ID" arrow 240 in Figure 2) to the system 100 requesting the current location of the locatee user. The system 100 checks that the location application running on the device 20 is suitably authorised by the locatee user to access the locatee user's current location and then transmits this information back to the requesting application running on device 20 (as represented in Figure 2 by the "user location record" arrow 245). Finally the application running on device 20 sends (as shown by the "provide user location" arrow 250) the requested location information to mobile device 12 which displays the requested information to the locator user. Note that although not explicitly illustrated in Figure 1 or 2, the device 20 is connected to the Internet and is therefore able to receive requests from any device connected to the Internet. Similarly, the above described sequence of events assumes that the locator user has already successfully logged on to the system 100 such that it also has access to the Internet from which it can contact the device 20.

Referring now to Figure 3, the steps performed in initially logging a user onto the system 100 will now be described in more detail, with a consideration of the operations of the relevant elements within the system 100, in particular AP 110, captive portal server 120, AAA server 40 and the user location manager 140. When the mobile device 10 sends the initial request for a web page to the AP 110 (illustrated by the "request web page" arrow 305 in Figure 3, corresponding to arrow 205 in Figure 2) the AP 110 is configured to automatically re-direct this message (including any preliminary messages, e.g. to set up a TCP connection with the destination server in the first place, etc.) to the captive portal server 120 (as illustrated by the "redirect web request" arrow 310 from the AP 110 to the captive portal server 120) which responds by sending a log on web page to the mobile device 10 (as indicated by the "present logon page (HTTPS)" arrow 315 which corresponds to arrow 210 in Figure2). The log on web page includes text fields in which the user can enter his user credentials (e.g. a user ID and a password) which are then transmitted back to the captive portal server 120 (as indicated by the "log on credentials (HTTPS)" arrow 320 which corresponds to arrow 215 in Figure 2). The serving of the log on web page and the response with the user credentials is done using a secure HTTPS connection; the use of captive portal servers in this way is well known in the art and the details thereof will not be further discussed herein except to note that the process occurs with no special software being required by the user device 10.

When the captive portal server 120 has received the log on credentials from the user, it generates a request (illustrated by the "request to validate user" arrow 325) to the AAA server 40 using whichever protocol the AAA server is configured to use which, in the present embodiment, is RADIUS. The AAA server 40 receives the request, processes it and sends a response (indicated in Figure 3 by the "authentication status" arrow 330) back to the captive portal server 120. In the example illustrated in Figure 3 the response from the AAA server 40 indicates that the user is successfully authenticated and so the captive portal server 120 sends a message (indicated by the "return key" arrow 335 in Figure 3) to the access point 110 informing the access point 110 to allow the connected device 10 to have full access to the Internet 30. At about the same time, the captive portal 120 sends a message (indicated in Figure 3 by the "map user to AP" arrow 340) to the user location manager server 140, including the IP address of the access point 110 (as an identifier of the AP) and the user ID of the user submitted to the AAA server.

On receipt of the message 335 from the captive portal server 120, the access point 110 generates a "lease" of a predetermined time of, in the present embodiment, 2 minutes and reconfigures its firewall to allow IP packets (and/or HTTP requests and responses, etc.) from or to the mobile device 10 through its wired interface (which is connected directly or indirectly to the Internet 30) and through its wireless interface so that the user may browse the Internet, send emails, etc. for the duration of the lease (and beyond if the user re-authenticates before the expiry of the lease). The lease is issued based on the MAC address of the mobile device which should in theory be unique for that device. The generation of the lease and accompanying reconfiguration of its firewall is illustrated in Figure 3 by the "issue lease" arrow 345. Additionally, in the present embodiment, the access point also automatically permits the originally requested web page to be collected from the Internet 30 and automatically displayed to the user (in alternative embodiments, the captive portal server might send a confirmation web page informing the user that he has successfully logged on etc.). The transmission of the originally requested web page to the user is indicated in Figure 3 by the "redirect to requested page" arrow 350 (which corresponds to arrow 225 in Figure 2).

On receipt of the message 340 from the captive portal server 120, the user location manager server 140 updates its records in the user database 142 to specify IP address of the access point 110 to which the user is connected, together with the present time (in the present embodiment the typical lease time is the same for all users and all access points and so this information is stored centrally and used to determine, on the basis of the timestamp information stored in the user details, whether or not any particular record for any given user is valid or not).

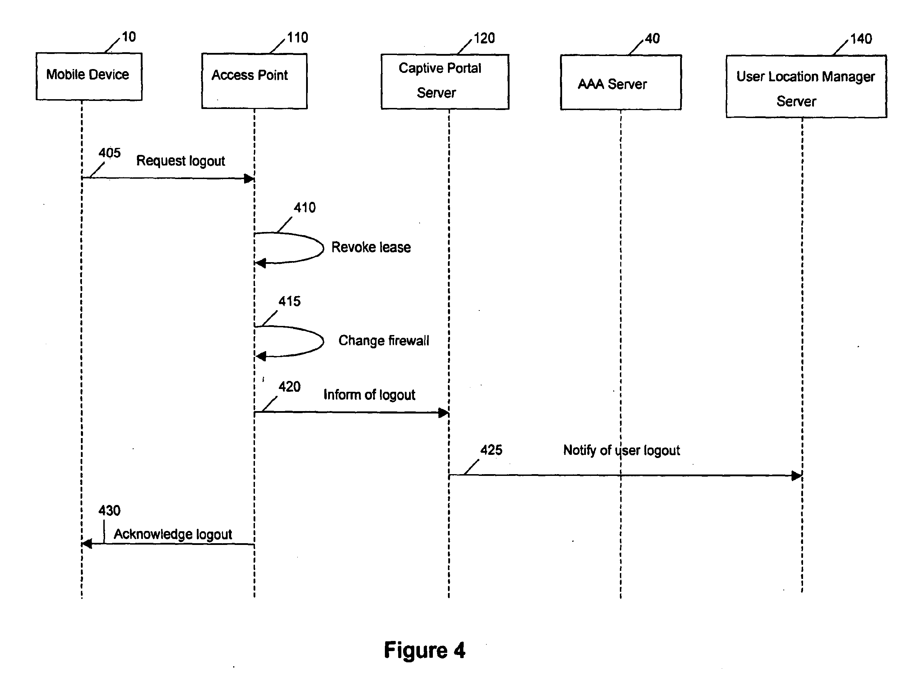

Referring now to Figure 4, the steps taken by, and the messages passed between, the same components as illustrated in Figure 3, during an active logging out, of the mobile device 10 from the system 100, initiated by the mobile are now described. Thus, when the user decides to log out from the system, the mobile device 10 sends a "request logout" message 405 to the access point 110. When the access point receives this it revokes the "lease" given to the mobile device 10 by "taking back the IP address" (in accordance with the DHCP) from the mobile device 10 so it is free to allocate this to another device logging on to the AP 110 and by re-configuring its firewall to prevent Internet Protocol (IP) packets from passing through the AP 110 either to or from the mobile device 10 (or more specifically to or from the IP address or the MAC address of the mobile device 10). These process are indicated in Figure 4 by the "revoke lease" message 410 and the "change firewall" message 415 respectively. Having completed these changes, the AP 110 sends an "inform of logout" message 420 to the captive portal server 120, informing the captive portal server that the user has logged out, whereupon the captive portal server 120 sends a "notify of user logout" message 425 to the user location manager server 140 which updates its records to indicate that the corresponding user has now logged out of the network and thus its location is no longer known and/or valid. After sending the "inform of logout" message 420 to the captive portal server 120, the AP 110 also sends an "acknowledge logout" message 430 to the mobile device 10 to acknowledge that the device 10 has now been logged out of the system 100.

Referring now to Figure 5, the steps taken by, and the messages exchanged between, the location application (running on device 20), the capability exposure platform 150 and the user location manager server 140, during a request by the location application for location information about a user logged on to the system 100, are now described. When a third party application such as the location application running on device 20 wishes to obtain location information about a user who might be connected to the system 100 via a wireless AP, it sends a message to the capability exposure platform 150, typically, as in the present embodiment, via an Internet connection.

Thus, when the location application running on device 20 wishes, on behalf of one of its clients (i.e. the locator user operating mobile device 12), to obtain the current location of the locatee user, it sends a "query user location(user ID)" message 505 (which includes the (user ID) as known by the system 100). Upon receipt of this message 505, the capability exposure platform 150 performs some internal processing to authenticate the application (i.e. that it is what it says it is) and to check that it is duly authorised by the user to be located to obtain the information, as indicated by the "resolve privacy requirements" arrow 510. Having satisfied itself that the application's request is legitimate, it generates a "query user location (user ID)" message 515 of its own which is sent to the user location manager server 140.

Upon receipt of the query message 515, the location manager server 140 queries the user database 142 to determine if it has stored a current record of the identified user, and if so it obtains the identity of the AP 110 to which the user in question is currently connected (this process is indicated in Figure 5 by the "get User (user ID)'s AP" message 520). Having obtained the ID (or IP address) of the AP 110 to which the locatee user is connected, the user location manager server 140 then queries the AP database 144 (with a "get AP location record" message 525) to obtain the details of the whereabouts of the AP 110 (whose identity was determined from the preceding lookup in the user database 142) and then it passes on the obtained location information back to the capability exposure platform 150 with a "return location record" message 530. The capability exposure platform 150 then passes on this location information in turn back to the location application which asked for the information with a "return location record" message 535 of its own.

## Claims

1. A computer network (100) operable to provide location information about a user of a mobile device (10) whilst the device is connected to the computer network via a wireless access point (110) to the network, the computer network including:
a captive portal server (120) for:
requiring a user to be authenticated and authorised by a service provider, to which the user subscribes when the user's mobile device is connected to the network via the wireless access point, the captive portal server comprising:
transmitting means for transmitting, in response to an HTTP request from the mobile device, a log-on web page to the device requesting user credentials,
generating means for generating an authentication request in dependence upon the requested user log on credentials,
transmitting means for transmitting the authentication request to an AAA server (40),
receiving means for receiving a response from the AAA server (40) and
instructing means for, if the response from the AAA server (40) indicates that the user is authenticated and authorised, instructing the wireless access point (110) to provide the mobile device (10) with access to the network; and
a user location manager server (140) for managing the storage, processing and maintenance of user location details;
the captive portal server (120) is further operable to notify the user location manager server (140), upon completion of a successful authentication or re-authentication of the user by the user's service provider's AAA server, of the user's identity and the identity of the wireless access point (140) to which the mobile device is connected.

2. A network as claimed in claim 1 further including an authentication, authorisation and accounting server (40) operable to authenticate a user in accordance with a secure authentication protocol.

3. A network as claimed in claim 1 or 2 wherein each wireless access point to the network is operable to dynamically allocate an Internet Protocol address to the mobile device upon connection to the network for a lease period of limited duration.

4. A network as claimed in claim 3 wherein the lease period is less than 15 minutes.

5. A network as claimed in any one of the preceding claims further including a capability exposure platform (150) for providing an interface to third party applications to access the user location information.

6. A method of obtaining location information about a user of a mobile device (10) connected to a computer network (100) via a wireless interface, the network including a wireless access point (110,112), a captive portal server (120) and a user location manager server (140), the method comprising:
the mobile device (10) connecting to the computer network, via the wireless interface and the wireless access point, and transmitting an HTTP request to the network;
the wireless access point forwarding this to the captive portal server (120) which then transmits, via the access point, In response to the HTTP request, a log-on web page to the mobile device requesting user credentials;
the captive portal server generating an authentication request in dependence upon the requested user log on credentials, transmitting this to an AAA server (40), receiving a response from the AAA server; and, if the response indicates that the user is authenticated and authorised,
the captive portal server sending details of the identification of the user and of the wireless access point, to which the mobile device is connected, to the user location manager server for storage thereof.

7. A method as claimed in claim 6 wherein the network dynamically allocates an Internet Protocol address to the mobile device upon its connection to the network for a lease period of limited duration.

8. A method as claimed in claim 7 wherein the lease period is less than 15 minutes.

9. A method as claimed in claim 6, 7 or 8 further including exposing an interface to third party applications over the internet by which they may query for location information about users connected to the network.

10. A computer program or programs for controlling a computer network to carry out the method of any one of claims 6 to 9 during execution of the program or programs.

11. Carrier means carrying the computer program or programs of claim 10.

## Patentansprüche

1. Computernetz (100), das dazu betreibbar ist, Standortinformation über einen Benutzer einer mobilen Vorrichtung (10) bereitzustellen, während die Vorrichtung mit dem Computernetz über einen drahtlosen Zugriffspunkt (110) auf das Netz verbunden ist, wobei das Computernetz beinhaltet:
einen Captive Portal (Zugangsportal) Server (120), um:
von einem Benutzer zu fordern, dass er von einem Serviceprovider, bei dem der Benutzer eingetragen ist, authentifiziert und autorisiert ist, wenn die mobile Vorrichtung des Benutzers mit dem Netz über den drahtlosen Zugriffspunkt verbunden ist, wobei der Captive Portal Server Folgendes umfasst:
Übertragungseinrichtungen zum Übertragen einer Anmeldungs-Webseite an die Vorrichtung, welche Benutzer-Zugangsdaten anfordert, als Antwort auf eine HTTP-Anfrage von der mobilen Vorrichtung,
Erzeugungseinrichtungen zum Erzeugen einer Authentifizierungsanfrage in Abhängigkeit von dem angeforderten Benutzerlog über Zugangsdaten,
Übertragungseinrichtungen zum Übertragen der Authentifizierungsanfrage an einen AAA-Server (40),
Empfangseinrichtungen zum Empfangen einer Antwort von dem AAA-Server (40) und
Anweisungseinrichtungen zum Anweisen des drahtlosen Zugriffspunkts (110), die mobile Vorrichtung (10) mit einem Zugriff zum Netz zu versehen, wenn die Antwort von dem AAA-Server (40) angibt, dass der Benutzer authentifiziert und autorisiert ist; und
einen Benutzerstandort-Managerserver (140) zum Managen des Speichers, der Verarbeitung und der Pflege der Benutzerstandortdetails;
wobei der Captive Portal Server (120) weiterhin dazu betreibbar ist, dem Benutzerstandort-Managerserver (140) bei Vollendung einer erfolgreichen Authentifizierung oder erneuten Authentifizierung des Benutzers durch den AAA-Server des Serviceproviders des Benutzers die Identität des Benutzers und die Identität des drahtlosen Zugriffspunkts (140) mitzuteilen, mit dem die mobile Vorrichtung verbunden ist.

2. Netz nach Anspruch 1, weiterhin mit einem Authentifizierungs-, Autorisierungs- und Abrechnungsserver (40), der dazu betreibbar ist, einen Benutzer nach Maßgabe eines sicheren Authentifizierungsprotokolls zu authentifizieren.

3. Netz nach Anspruch 1 oder 2, wobei jeder drahtlose Zugriffspunkt auf das Netz dazu betätigbar ist, der mobilen Vorrichtung bei Verbindung mit dem Netz eine Internet-Protokolladresse für ein Mietzeitintervall von begrenzter Dauer dynamisch zuzuteilen.

4. Netz nach Anspruch 3, wobei das Mietzeitintervall weniger als 15 Minuten beträgt.

5. Netz nach irgendeinem der vorhergehenden Ansprüche, weiterhin mit einer Fähigkeitsfreilegungsplattform (150) zum Bereitstellen einer Schnittstelle für Fremd-Anwendungen für den Zugriff auf die Benutzerstandortinformation.

6. Verfahren zum Erhalten von Standortinformationen über den Benutzer einer mobilen Vorrichtung (10), die mit einem Computernetz (100) über eine drahtlose Schnittstelle verbunden ist, wobei das Netz einen drahtlosen Zugriffspunkt (110, 112), einen Captive Portal Server (120) und einen Benutzerstandort-Managerserver (140) einschließt und das Verfahren umfasst:
dass die mobile Vorrichtung (10) mit dem Computernetz über die drahtlose Schnittstelle und den drahtlosen Zugriffspunkt verbunden ist und eine HTTP-Anfrage an das Netz überträgt;
dass der drahtlose Zugriffspunkt diese an den Captive Portal Server (120) weiterleitet, der dann über den Zugriffspunkt als Antwort auf die HTTP-Anfrage eine Anmeldungs-Webseite an die mobile Vorrichtung überträgt, welche Benutzerzugangsdaten anfordert,
dass der Captive Portal Server eine Authentifizierungsanfrage in Abhängigkeit von dem angeforderten Benutzerlog über Zugangsdaten erzeugt, diese an einen AAA-Server (40) überträgt, eine Antwort von dem AAA-Server erhält; und, wenn die Antwort angibt, dass der Benutzer authentifiziert und autorisiert ist,
dass der Captive Portal Server Details der Identifizierung des Benutzers und des drahtlosen Zugriffspunkts, mit dem die mobile Vorrichtung verbunden ist, an den Benutzerstandort-Managerserver zur Speicherung derselben sendet.

7. Verfahren nach Anspruch 6, wobei das Netz der mobilen Vorrichtung bei deren Verbindung mit dem Netz eine Internet-Protokolladresse für ein Mietzeitintervall von beschränkter Dauer dynamisch zuteilt.

8. Verfahren nach Anspruch 7, wobei das Mietzeitintervall weniger als 15 Minuten beträgt.

9. Verfahren nach Anspruch 6, 7 oder 8, weiterhin mit dem Freilegen einer Schnittstelle für Fremd-Anwendungen über das Internet, durch welche sie Standortinformation über mit dem Netz verbundene Benutzer erfragen können.

10. Computerprogramm oder -programme zum Steuern eines Computernetzes zur Ausführung des Verfahrens nach irgendeinem der Ansprüche 6 bis 9 während der Ausführung des Programms oder der Programme.

11. Trägereinrichtung, die das Computerprogramm oder die Computerprogramme nach Anspruch 10 trägt.

## Revendications

1. Un réseau informatique (100) dont le fonctionnement permet de fournir des informations concernant la localisation d'un utilisateur d'un appareil mobile (10) quand l'appareil est connecté au réseau informatique via un point d'accès sans fil (110) au réseau, le réseau informatique comprenant :
un serveur de portail captif (120), pour :
exiger l'authentification et l'autorisation d'un utilisateur de la part d'un fournisseur de service auquel l'utilisateur souscrit lorsque l'appareil mobile de l'utilisateur est connecté au réseau via le point d'accès sans fil, le serveur de portail captif comprenant :
des moyens de transmission pour émettre, en réponse à une requête HTTP émise par l'appareil mobile, une page Web de connexion (*login*) de l'appareil demandant des justificatifs d'identité de l'utilisateur,
des moyens de génération pour produire une demande d'authentification en fonction des justificatifs d'identité de l'utilisateur demandés,
des moyens de transmission pour transmettre la demande d'authentification à un serveur AAA (40),
des moyens de réception pour recevoir une réponse du serveur AAA (40) et
des moyens de commande pour, dans le cas où la réponse du serveur AAA (40) constate l'authentification et l'autorisation de l'utilisateur, commander au point d'accès sans fil (110) de fournir un accès au réseau à l'appareil mobile (10); et
un serveur gestionnaire (140) de la localisation d'utilisateur pour la gestion du stockage, du traitement et de la maintenance des détails de localisation d'utilisateur ;
le serveur de portail captif (120) pouvant également fonctionner afin de notifier le serveur gestionnaire (140) de la localisation des utilisateurs, à l'issue d'une authentification ou ré-authentification réussie de l'utilisateur par le serveur AAA du fournisseur de service de l'utilisateur, de l'identité de l'utilisateur et l'identité du point d'accès sans fil (140) auquel l'appareil mobile est connecté.

2. Réseau tel que revendiqué dans la revendication 1 comprenant en outre un serveur d'authentification, d'autorisation et de comptabilisation (40) dont le fonctionnement permet d'authentifier un utilisateur conformément à un protocole d'authentification sécurisé.

3. Réseau selon la revendication 1 ou 2 dans lequel le fonctionnement de chaque point d'accès sans fil au réseau permet d'allouer dynamiquement une adresse de protocole Internet à l'appareil mobile lors de la connexion au réseau pour une période de location d'une durée limitée.

4. Réseau selon la revendication 3, dans lequel la durée de la location est de moins de 15 minutes.

5. Réseau selon l'une quelconque des revendications précédentes comprenant en outre une plate-forme d'exposition des possibilités (150) pour fournir une interface à des applications tierces pour accéder à l'information de localisation de l'utilisateur.

6. Un procédé d'obtention de renseignements concernant la localisation d'un utilisateur d'un appareil mobile (10) connecté à un réseau informatique (100) via une interface sans fil, le réseau comprenant un point d'accès sans fil (110, 112), un serveur de portail captif (120) et un serveur gestionnaire (140) de la localisation d'utilisateur, le procédé comprenant :
l'établissement d'une connexion par l'appareil mobile (10) au réseau informatique, via l'interface sans fil et le point d'accès sans fil, et une émission d'une requête HTTP vers le réseau ;
l'acheminement de cette requête par le point d'accès sans fil au serveur de portail captif (120) et la transmission par ce dernier, via le point d'accès, en réponse à la requête HTTP, d'une page Web de connexion *(login)* à l'appareil mobile avec une demande de justificatifs d'identité de l'utilisateur ;
la génération par le serveur de portail captif d'une demande d'authentification en fonction des justificatifs d'identité de l'utilisateur demandés, et la transmission de cette demande à un serveur AAA (40), la réception d'une réponse du serveur AAA ; et, dans le cas où la réponse constate l'authentification et l'autorisation de l'utilisateur,
l'envoi par le serveur de portail captif de détails de l'identification de l'utilisateur et du point d'accès sans fil, auquel est connecté l'appareil mobile, au serveur gestionnaire de la localisation d'utilisateur pour y être stockés

7. Procédé selon la revendication 6, dans lequel le réseau alloue dynamiquement une adresse de protocole Internet à l'appareil mobile dès sa connexion au réseau pour une période de location d'une durée limitée.

8. Procédé selon la revendication 7, dans lequel la durée de la location est de moins de 15 minutes.

9. Procédé selon la revendication 6, 7 ou 8 comprenant en outre l'exposition d'une interface à des applications tierces sur l'Internet leur permettant d'émettre des demandes de renseignement concernant les utilisateurs connectés au réseau.

10. Un programme d'ordinateur ou des programmes d'ordinateur destiné(s) à commander un réseau informatique pour la mise en oeuvre du procédé de l'une des revendications 6 à 9 lors de l'exécution du programme ou des programmes.

11. Support portant le ou les programme(s) d'ordinateur de la revendication 10.
